# EUROPEAN PATENT APPLICATION

(11) **EP 4 056 461 A1**
(43) Date of publication of application: **14.09.2022**
(21) Application number: 21161544.8
(22) Date of filing: 09.03.2021
(51) Int. Cl.: B63B 27/34, F03D 9/11, F03D 9/17, F17C 1/00, F03D 9/10, B63B 35/44

(54) **OFFSHORE FUELING SYSTEM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

There are described an offshore fueling system (100) and a method for fueling a vessel (101), the offshore fueling system (100) comprising a fuel storage tank (102) installed offshore above a seabed (S), a feeding line (103) fluidly connected to the fuel storage tank (102) and configured for being coupled to the vessel (101), and a control unit (104) configured for automatically detecting the vessel (101) to be fueled and configured for automatically coupling the feeding line (103) to the vessel (101).

## Description

### Field of invention

The present invention relates to the field of an offshore fueling system for fueling a vessel, and to a method for fueling a vessel and.

### Art Background

With the growing demand for green energy, offshore wind is expected to be a crucial element in the future energy mix. Electrofuels like hydrogen or ammonia are a convenient way of storing electric energy in the form of chemical bond energy. Offshore wind turbines provided with an electrolyzer unit may convert sea water into hydrogen and oxygen or other gasses or fluids. Vessels are currently mainly powered by combustion engines burning fossil fuels. However, there is also a growing number of vessels, which use regenerative fuels such as electrofuels as their main source of energy. Using electrofuels such as hydrogen may however be hazardous to infrastructure and personnel working at a harbor. Furthermore, transporting a fuel, in particular a regenerative fuel, may deteriorate the ecological footprint and may also be cost and energy inefficient.

There may thus be a need for providing a safe and efficient system and method for fueling a vessel offshore, in particular at the site of the production of the fuel.

### Summary of the Invention

This need may be met by the subject matter according to the independent claims. Advantageous embodiments of the present invention are described by the dependent claims.

According to a first aspect of the invention, there is provided an offshore fueling system for fueling a vessel, the fueling system comprising a fuel storage tank installed offshore above a seabed, a feeding line fluidly connected to the fuel storage tank and configured for being coupled to the vessel, and a control unit configured for automatically detecting the vessel to be fueled and configured for automatically coupling the feeding line to the vessel.

According to a second aspect of the invention, there is provided a method for offshore fueling a vessel, the method comprising detecting, by means of a control unit and a communication unit connected to the control unit, the vessel to be fueled, automatically coupling a feeding line to the vessel, wherein the feeding line is fluidly coupled to a fuel storage tank, wherein the fuel storage tank is installed offshore above a seabed, and fueling the vessel.

In the context of the present application, the term "offshore" may particularly denote being installed away from a seashore, on the water.

In the context of the present application, the term "vessel" may particularly denote ship, such as a service vessel, a container or transport ship, or any other marine vehicle of no particular size or shape. More particularly, a vessel in the context of the present application may at least partially be able to use an electrofuel as a source of energy. Examples for a vessel in the sense of the present application are fuel tankers and bunker vessels, which may also be used to transport fuel to other locations such as a harbor. A bunker vessel may also be fueled by the offshore fueling system and may then be used to fuel another vessel "on the go" and to taxi between vessels and the fueling system.

According to embodiments of the invention, the vessel may be anchored or moored to a fixpoint in the vicinity of the fueling system during fueling operation. However, it may be preferred that the vessel's position is controlled digitally during fueling operation (i.e. the vessel is in a digital position mode).

In the context of the present application, the term "storage tank" may particularly denote a container or reservoir configured for storing a fluid, in particular a gas or a liquid. Such a container may preferably be liquid and gas tight and pressure resistant, as well as resistant against environmental impacts.

In the context of the present application, the term "installed above a seabed" may particularly denote being installed above or below sea level and further in particular in a relatively fixed place in relation to the seabed. The storage tank may be fixed to the ground by a rigid fundament, such as a concrete fundament, or a steel beam/framework, or on a floating platform. Furthermore, the storage tank may be configured to be floating on a surface of a sea/lake and may be fixed by anchor chains to the ground.

In the context of the present invention, the term "fuel" may particularly denote a gas, such as hydrogen, oxygen, nitrogen, an alkane gas, ammonia and other electrofuels, and natural gas. Furthermore, the term "fuel" may also denote a liquid, such as water, in particular pure (demineralized) water, liquefied natural gas, mineral oil, intermediate fuel oil, synthetic fuel, heavy oil, and diesel oil, in particular marine diesel oil. The term "fueling" may thus particularly denote providing or supplying a vessel with a fuel. Fueling may be carried out actively, e.g., by means of a pump, or passively, e.g., by means of a pressure gradient.

In the context of the present invention, the term "feeding line" may particularly denote a tubular structure or hollow body for conducting a liquid or gas, the line comprising a circumferential wall, and a hollow (a void volume), and at least partially having a cylindrical shape, such as a pipe or a hose. A feeding line may be rigid or may be flexible. In some embodiments, a feeding line may also be or comprise an electric cable for transporting electricity, e.g., from an electricity storage (a battery) of a wind turbine, to a vessel. In the context of the present application, the terms "to connect" (connecting, connection) or "to couple" (coupling) may particularly denote establishing a link for joining together two or more systems, lines, grids etc. which are of similar type, and without loss (or leakage) of the matter (e.g., a fluid, electricity, signals, data, etc.) that is transported by what is linked (connected, coupled) together. In context of the present invention, the term "coupling" may mean for example establishing a detachable, fluid tight coupling between the feeding line and a respective receiving element (e.g., a flange or a filler neck) of the vessel to be fueled.

According to an embodiment of the invention, the fueling system may include a flow monitoring system (e.g. integrated in the feeding line and/or on the vessel) for monitoring a fuel flow. The system may further be configured for conducting a self-test before a fueling process. For example, if a fuel is detected in the system, the system may abort (stop) a fueling operation and run a test to locate with a further fluid (such as a safe gas like CO₂) to detect a leakage point. This may ensure safe fueling operations.

In the context of the present invention, the term "control unit" may particularly denote a unit or system comprising CPUs, computers, servers, software, etc. In the same context, the term "communication unit" may particularly denote a unit or system comprising CPUs, computers, servers, software, antennae, audiovisual devices, transceivers, satellite dishes, radar or sonar units, light sources, and other means of communication. In this context, the term "automatic" particularly denotes an action or event according to a software program and/or controlled by a machine and at least partially without human interaction. In this context, the control unit may be coupled to respective detection elements for detecting the vessel to be fueled, such as position sensors, distance sensors or image capture and analysis equipment. Furthermore, the control unit may be coupled to respective driving means of the feeding line for driving and coupling the feeding line to the vessel. As described in further detail below, the driving means may be a propelling unit or a movable holding unit. Hence, the control unit may detect the vessel and may control, upon detection of the vessel, the moving, coupling and fueling procedure of the feeding line.

Hence, according to the approach of the present invention, an automatic offshore fueling station is provided for enabling the fueling of a vessel directly from a wind turbine, or from a platform located close thereby, in a windfarm (wind park). Contrary to conventional fuels, the fuel according to embodiments of the present invention may be a so-called "green fuel" such as a gas like hydrogen, ammonia, natural gas, methane, or methanol. Also, the system may facilitate electrical charging of a battery driven vessel type, e.g., based on electricity produced by a wind turbine. In the latter case, an electrical plug may be an interface e.g., such interface placed on a service crane arm (which may normally be found on offshore wind turbines). The service crane (or a holding apparatus in general) may extend the energy transferring line (such as a cable) from the offshore structure / wind turbine and/or foundation to the vessel. For fuel (gas or liquid) transport, a similar interface (or coupling unit) may be used for enabling the transport of a fuel to the vessel. Such interface may also be provided directly on e.g. the tower or the platform connected to the foundation on which the tower is placed. A dedicated platform located close to a wind turbine (e.g. a collector platform taking energy input from numerous wind turbines which feed the energy source to a common point of coupling) may also be provided. Such a platform may be used if safety requirements call for a certain distance between a wind turbine and a vessel. The concept of the present invention may hence provide a solution for enabling a safe and efficient way of providing power to a fleet of eco-friendly vessels, driven on regenerative fuels or regenerative sources of power.

According to an embodiment of the invention, the offshore fueling system may further comprise an offshore wind turbine, wherein the offshore wind turbine comprises a fuel production unit, and wherein the fuel storage tank and the feeding line are comprised by the offshore wind turbine. According to another embodiment of the invention, the fuel production unit may comprise an electrolyzer for electrolyzing water into hydrogen and oxygen, in particular by using electricity generated by the offshore wind turbine.

In the context of the present invention, the term "wind turbine" may particularly denote a wind driven generator system with a powerhouse mounted on a tower. Hence, the wind turbine comprises a generator for generating electricity, and a gas production unit, such as an electrolyzer or a biogas reactor, for converting electric energy into chemical bond energy of a fluid (in particular a gas). A wind turbine in the context of this application may for example further comprise a fluid (or fuel) storage tank and other process units for further processing the gas. For example, hydrogen from electrolysis may be further processed in an ammonia production process. Hence, an autonomous offshore fueling station may be provided, wherein on the basis of wind energy, a "green" fuel, e.g. hydrogen, may be produced and respective hydrogen driven vessels may be fueled automatically. A wind turbine in the context of this application may for example be installed on a bottom-fixed foundation or on a floating foundation.

According to a further embodiment of the invention, the feeding line may be configured for feeding a fuel to the vessel, wherein the fuel is selected from the group consisting of ammonia, hydrogen, oxygen, liquefied natural gas, methanol, ethanol, propane, butane, gasoline, intermediate fuel oil, heavy oil, and diesel oil, in particular marine diesel oil.

It may also be advantageous to mix different fuels in order to facilitate storage and/or fueling, and to lower the corrosiveness and/or the fugacity of the fuel.
Accordingly, also the fuel storage tank and all other components of the fueling system being in contact with the respective fuel may be configured for handling the respective fuel accordingly.

According to an embodiment of the present invention, the offshore fueling system may further comprise a holding apparatus for holding the feeding line, wherein the holding apparatus is retractable and extendable, such that the holding apparatus is retracted in an idle state, in which the feeding line is decoupled and retracted from the vessel, and such that the holding apparatus is extendable in an operational state, in which the feeding line is extended and coupled to the vessel. The holding apparatus is selected from one of the group consisting of a cantilever, a boom, a crane arm, and a reel.

In the context of the present invention, the term "idle state" may particularly describe the state in which the fueling system is not operational (not in use) and the feeding line is decoupled from the vessel, e.g. in a parking position for maintenance or repair work or whenever no vessel is being fueled. Contrarily, in the context of the present invention, the term "operational state" particularly denotes a state in which the fueling system is in use and the feeding line is extended and coupled to the vessel to be fueled, i.e. before, during or after a vessel is being fueled.

In the context of the present application, the term "retractable" (or retracted) may particularly denote reversibly pulling or positioning the holding apparatus or the feeding line close, e.g., folding or rolling it up, such that it may reach its minimum extension or length. Contrarily, in the context of the present invention, the term "extendable" (or extended) particularly denotes reversibly holding or stretching out the holding apparatus or feeding line towards the vessel, such that it may reach its full extension or length. For example, if the holding apparatus for holding the feeding line is a crane arm, it may be extended towards the vessel by unfolding it, and it may be retracted from the vessel by folding it up again. This has the advantage that vessels may not have to come close to the fueling system, in particular if the fueling system comprises a wind turbine. Furthermore, in an idle state, the feeding line or holding apparatus may be safely stored when it is retracted. The fueling system may thus also be easily adapted to different sizes of vessels. According to another embodiment of the invention, the feeding line may comprise a coupling unit, wherein the coupling unit is configured for being coupled to a coupling unit reception of the vessel. A coupling unit may for example comprise a first flange, and the coupling unit reception (e.g., a flange or a filler neck) of the vessel may comprise a second flange, which may act as a counterpart to the first flange. The coupling unit and the coupling unit reception may in general work by the lock-and-key principle.

According to another embodiment of the invention, the feeding line may be a floating feeding line configured for at least partially floating on a sea surface, and wherein the offshore fueling system further comprises a propelling unit, in particular a remotely operated vehicle, controlled by the control unit and configured for propelling the floating feeding line towards the vessel. In other words, for instance for the case that very large vessels have to be fueled, and in particular if the fueling system comprises a wind turbine, it may be too dangerous for a large vessel to approach or come close to the wind turbine. At the same time, the required distance between the wind turbine and the vessel may not be covered by a holding apparatus such as a crane, for example for mechanical or static reasons. In this case, a floating feeding line is provided, which has a buoyancy that allows it to at least partially float on the sea surface. Floating devices, such as floating bodies (buoys or other objects selectively filled with air), may assist the floating feeding line in floating, for example if the weight of the feeding line and/or the fuel inside the feeding line is too great to allow floating. A propelling unit, which may be controlled by the control unit of the fueling system, for example wirelessly, may then propel the floating feeding line towards the vessel. The propelling unit may comprise one or a plurality of particularly electrically driven propellers being arranged at the floating feeding line. The propellers may be aligned by the control unit for directing the feeding line in a desired direction. The vessel in return may lower a fuel pipeline to the sea surface, the fuel pipeline comprising the coupling unit reception, so that the coupling unit of the feeding line may be coupled to the coupling unit reception of the vessel on sea level and outside of the vessel. Providing a propelling unit is particularly advantageous for conducting a safe, precise, and cost-efficient coupling of the feeding line to the vessel. The propelling unit may be unmanned and may be at least partially controlled by the control unit.

According to another embodiment of the invention, the fueling system may further comprise a compensation mechanism configured for stabilizing the holding apparatus in use by compensating for the movement of the vessel. This may be advantageous in the case that the fueling system is less sensitive to the motion of the sea (of the current and the waves) than the vessel. A vessel will naturally be moved by the sea in all three dimensions of space. However, the fueling system may for example be relatively well fixed above the seabed and may therefore have less movement than the vessel. However, when the vessel is coupled to the feeding line, the difference in motion may cause the feeding line or the holding apparatus to break, rip or be otherwise damaged. The compensation mechanism may prevent the fueling system from taking damage by compensating the movement of the vessel. For example, if the vessel moves away from the fueling station, the compensation mechanism may ensure that the feeding line is extended further. If the vessel moves upwards or downwards along with the movement of the waves, the compensation mechanism gives control signals via the control unit and may for example raise or lower the holding apparatus, which is holding the feeding line. In the case of the floating feeding line, the propelling unit may for example propel the floating feeding line away from or towards the moving vessel. The compensation mechanism may for example comprise cameras for detecting the movement of the vessel and/or the sea, sensors for measuring the wind speed and/or the current and/or position sensors, such as acceleration sensor, for determining the alignment of the vessel, the feeding line, and the holding apparatus, respectively. Furthermore, the compensation mechanism may comprise mechanical elements such as motors or other actors to provide the necessary position compensation to the holding apparatus and/or the feeding line. Such motors may be powered by electricity provided by a generator of a wind turbine.

According to another embodiment of the invention, the fueling system further comprises a storage compartment configured for receiving and storing the coupling unit and further configured for cleaning the coupling unit inside the storage compartment by means of a cleaning unit. For example, after fueling a vessel, the coupling unit may be contaminated with fuel and/or sea water, which may both be corrosive. Hence, it may be advantageous to store the coupling unit, or the part of the feeding line comprising the coupling unit, in a storage compartment, such as a housing. The housing may be liquid tight and may provide protection against environmental impact such as wind and sea water. Within the storage compartment, there may be arranged a cleaning unit comprising for example water jets and/or brushes for automatically cleaning the coupling unit. The storage compartment may be configured for automatically releasing the coupling unit when the feeding line is extended, and may be configured for automatically receiving the coupling unit when the feeding line is retracted, for example after having fueled a vessel.

According to another embodiment of the invention, the offshore fueling system may further comprise a communication unit connected to the control unit, wherein the communication unit is configured for processing, receiving and/or sending one of Automatic Identification System signals, weather data, vessel data, motion of the sea data, connection completion data, fueling operation completion data, digital positioning system data, or fueling system fluid management data. Automatic Identification System (also Universal Automatic Identification System) is an automatic tracking system that uses transceivers on vessels and provides unique identification, position, course, and speed of a vessel. Other protocols or systems may however be used. The communication unit may be configured for communicating with vessels, but also with components of the fueling system, such as probes and sensors, the propelling unit, a fuel system fluid management etc. The control unit may take into account weather forecast data. If the weather data do not meet certain criteria (e.g. if the sea is too rough, or if wind speeds exceed predetermined limits), the fueling operation may be postponed.

According to an embodiment of the second aspect of the present invention, the detecting of the vessel comprises receiving, via the communication unit, Automatic Identification System data of the vessel, wherein the communication unit is coupled to the coupled to the control unit. The detecting may further comprise receiving, via the communication unit, fuel request data from the vessel, and sending, via the communication unit, position data and instructions for the vessel. For example, the Automatic Identification System data of the vessel are received and matched with preset data. A vessel may have booked a fueling event in advance, and the corresponding vessel data may have been stored in a storage of the control unit. If the received vessel data and the stored (preset) vessel data match, the control unit may determine an approximate time at which the vessel may arrive. The vessel may also send data regarding the amount of fuel needed, which data may be received by the communication unit. The control unit may then send, via the communication unit, position data and instructions for the vessel, such as how the vessel may have to position itself in order for the feeding line to be coupled.

According to an embodiment of the same aspect of the present invention, the coupling of the feeding line to the vessel may comprise automatically extending the feeding line towards the vessel by means of a propelling unit, in particular a remotely operated vehicle, controlled by the control unit and configured for propelling the floating feeding line towards the vessel, or by means of a holding apparatus. Furthermore, according to an embodiment of the invention, coupling of the feeding line to the vessel may comprise coupling a coupling unit of the feeding line to a coupling unit reception of the vessel, and receiving, via the communication unit, a signal indicative of completion of the coupling. Receiving the signal indicative of completion of the coupling may have the advantage that a safe coupling is ensured, and that fuel will not be lost due to an incomplete (e.g., not tight) coupling. The coupling unit and/or the coupling unit reception may comprise a sensor unit configured for sensing whether the coupling was successful (completed) and further configured for transmitting the signal indicative of indicative of completion of the coupling.

According to an embodiment of the present invention, fueling the vessel comprises transferring a fuel from a fuel storage tank of the offshore fueling system via the feeding line to the vessel. Fueling may be carried out actively, e.g., by means of a pump, or passively, e.g., by means of a pressure gradient. For example, if the fuel pressure in a tank of the vessel is much lower than the fuel pressure in the fueling system, the fuel may be pushed into the fuel tank of the vessel as a result of the pressure gradient. A pump may be configured according to the type of fuel in use.

According to an embodiment of the present invention, the method further comprises completing the fueling operation, wherein the completing comprises receiving, via the communication unit, a signal indicative of completion of the fueling of the vessel, decoupling the coupling unit from the coupling unit reception, retracting the feeding line by means of the propelling unit, or by means of a holding apparatus, receiving and storing the coupling unit in a storage compartment configured for receiving and storing the coupling unit and further configured for cleaning the coupling unit inside the storage compartment by means of a cleaning unit, and cleaning the coupling unit by means of the cleaning unit. The signal indicative of completion of the fueling of the vessel may for instance be given by sensor units installed in the fuel grid of the vessel, or by a liquid flow counter installed in the fueling system. By decoupling the coupling unit, the vessel is separated from the fueling system and may be free to continue the journey. Likewise, the fueling system may conduct another fueling operation according to embodiments of the invention, or may return to an idle state, for example for reproducing fuel to fill the fuel storage tank.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

The illustration in the drawings is schematic. It is noted that in different figures, similar or identical elements or features are provided with the same reference signs. In order to avoid unnecessary repetitions, elements, or features, which have already been explained in the description of a previously described embodiment, are not elucidated again at a subsequent portion of the description.

Furthermore, spatially relative terms, such as "front" and "back", "above" and "below", "left" and "right", et cetera are used to describe an element's relationship to other element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting, as a device according to an embodiment of the invention may assume orientations different from those illustrated in the figures when in use.
**Figure 1** shows an offshore fueling system according to an embodiment of the invention, wherein the feeding line is held by a holding apparatus.
**Figure 2** shows an offshore fueling system according to an embodiment of the invention, wherein the feeding line is a floating feeding line.
**Figure 3** shows an offshore fueling system according to embodiments of the invention, wherein the feeding line is decoupled in an idle state.
**Figure 4** shows an offshore fueling system according to embodiments of the invention, wherein the feeding line is being coupled to a vessel in an operational state.
**Figure 5** shows an offshore fueling system according to embodiments of the invention, wherein the feeding line is coupled to a vessel and wherein the movement of the vessel is compensated by compensation movement of the feeding line.
**Figure 6** shows an offshore fueling system according to another embodiment of the invention, wherein the feeding line is decoupled in an idle state and wherein the coupling unit is stored in a storage compartment and cleaned by means of a cleaning unit.
**Figure 7** shows a method for offshore fueling a vessel.

### Detailed Description

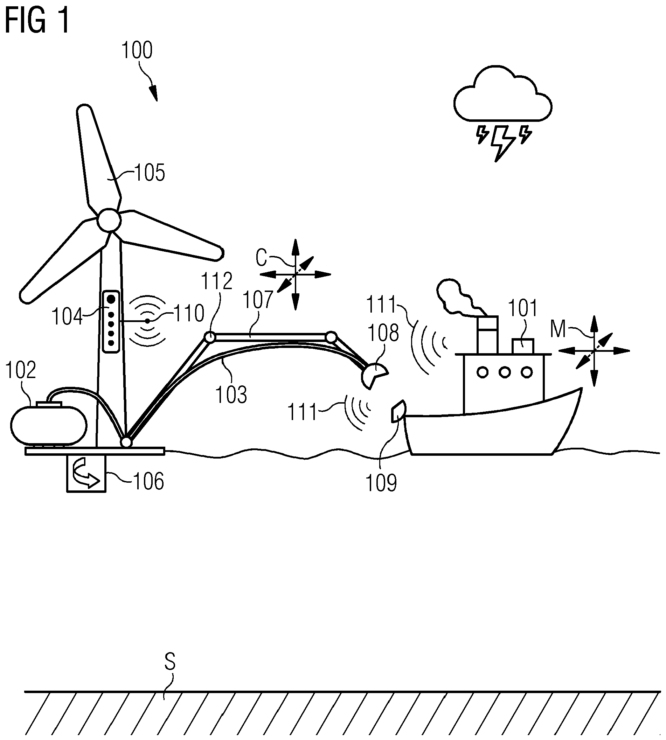

**Figure 1** shows an offshore fueling system 100 according to an embodiment of the invention, wherein the feeding line 103 is held by a holding apparatus 107. The feeding line 103 is fluidly connected to a fuel storage tank 102 (fluid connection not shown). At an end of the feeding line 103, there is arranged a coupling unit 108 for coupling the feeding line 103 to a vessel 101. The fuel storage tank 102 and the feeding line 103 are comprised by an offshore wind turbine 105. The fuel storage tank 102 may be arranged outside of the structure of the wind turbine 105 but may also be arranged inside the structure of the wind turbine, or even underwater or on a separate platform (not shown).

The vessel 101 is positioned at a distance to the offshore wind turbine 105 so as to be safe from the blades of the wind turbine 105 and so as to not accidentally drive against the wind turbine 105 or any other component of the fueling system 100. The system 100 further comprises a fuel production unit 106. The fuel production unit 106 may for example be or comprise an electrolyzer for using the principle of electrolysis to generate (produce) hydrogen from water (in particular pure water, wherein the pure water may for example be produced from sea water by a water purification unit of the fueling system). The produced fuel may be stored inside the fuel storage tank 102.

The system 100 may furthermore comprise, as shown, a control unit 104, which may for example be located within a wind turbine 105, but may also be arranged inside a control unit housing of the fueling system. The control unit 104 may be connected to a communication unit 110, which may for example comprise antennae and sensors for sending and receiving signals 111. As can be taken from Figure 1, the feeding line 103 is held by a holding apparatus 107, which may for instance be a crane arm, or a boom. The crane arm 107 is extended (or unfolded or pivoted) towards the vessel 101. While extending the holding apparatus 107 (or the feeding line 103 in general, it may become longer. This means that the length of the feeding line 103 may need to be adapted to the extended length of the holding apparatus. Hence, it may be advantageous to store the feeding line 103 on a reel, from which the feeding line may be unreeled in order to gain more length when being extended towards the vessel 101.

The vessel may comprise, as shown in Figure 1, a coupling unit reception 109, which may be formed as a filling neck or as a flange. Other coupling means are possible. In Figure 1, there is also shown a three-dimensional movement M of the vessel 101, which may be caused by the motion of the sea. The fueling system 100 may thus further comprise a compensation mechanism configured for stabilizing the holding apparatus 107 in use by compensating for the movement M of the vessel 101 caused by the motion of the sea. For example, if the vessel 101 moves away from the fueling station, the compensation mechanism may ensure that the feeding line 103 (and/or the holding apparatus 107) is extended further. If the vessel 101 moves upwards or downwards along with the motion of the waves, the compensation mechanism gives control signals via the control unit 104 and may for example raise or lower the holding apparatus 107, which is holding the feeding line 103. In other words, a compensation movement C may correspond to a movement M of the vessel 101.

The compensation mechanism may function fully automatically, controlled by the control unit 104. For this purpose, the holding apparatus 107 may comprise actors 112 (for example hydraulic actors or preferably servomotors which are, in a preferred embodiment, powered by electric energy generated by the wind turbine 105). Furthermore, the coupling unit 108 and/or the coupling unit reception 109 may be provided with sensors for sensing (detecting) whether a coupling between the coupling unit 108 and the coupling unit reception 109 was completed successfully. A signal 111 indicative of the completion of the coupling may then be sent and may be received by the communication unit 110 and processed by the control unit 104. The control unit 104 may then initiate the fueling operation, e.g., by activating a pump or by opening valves (not shown).

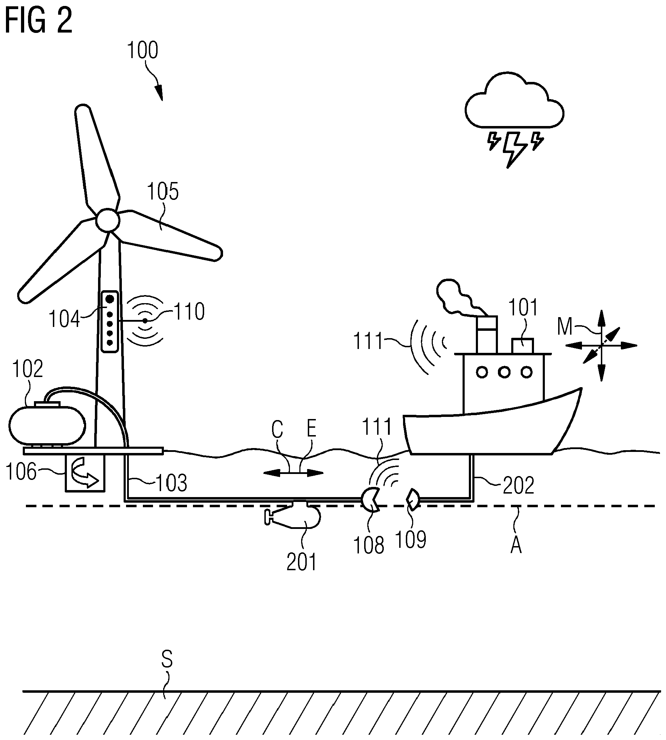

**Figure 2** shows an offshore fueling system 100 according to an embodiment of the invention, wherein the feeding line 103 is a floating feeding line. However, in the case of the feeding line 103 being a floating feeding line, there may be provided a holding apparatus 107 for at least partially holding the feeding line 103. The floating feeding line 103 may be propelled by means of at least one propelling unit 201 in an extension direction E towards the vessel 101. The propelling unit 201 may for example be a remotely operated vehicle, configured for driving in the water, in particular at least partially above the water surface A or under the water surface A. The propelling unit 201 may according to a preferred embodiment be powered by electricity generated by the wind turbine 105 and may be controlled by the control unit 104. The propelling unit 201 may be connected to the control unit 104 by means of a cable or by means of wireless communication, for example via the communication unit 110. The propelling unit 101 may drive (propel) the feeding line 103 towards the vessel 101, in particular in the case that the vessel 101 is a very large vessel, such as a container vessel.

The vessel 101 may lower a fuel pipeline 202 to the sea surface A, the fuel pipeline 202 comprising the coupling unit reception 109 (for example a flange or another appropriate coupling means), so that the coupling unit 108 of the feeding line 103 may be coupled to the coupling unit reception 109 of the vessel 101 on sea level (substantially on the level of the sea or water surface A) and outside of the vessel 101. This may increase safety, for example in the case of a leak in the coupling unit. Upon completion of the fueling operation and decoupling of the coupling unit 108 and coupling unit reception 109, the at least one propelling unit 201 may propel (drive) the feeding line 103 in the reverse direction E. In the case that the feeding line 103 is a floating feeding line, particularly a two-dimensional movement M of the vessel 101 may be compensated by the compensation mechanism. For example, if the vessel 101 is moved away from the fueling system 100, the compensation mechanism may further extend the feeding line 103 along a compensation direction C which corresponds with the extension direct E. The coupling mechanism (i.e., the coupling unit 108 and the coupling unit reception 109) may comprise sealing means for sealing against sea water. This may be necessary to prevent sea water from entering the fuel pipeline 202.

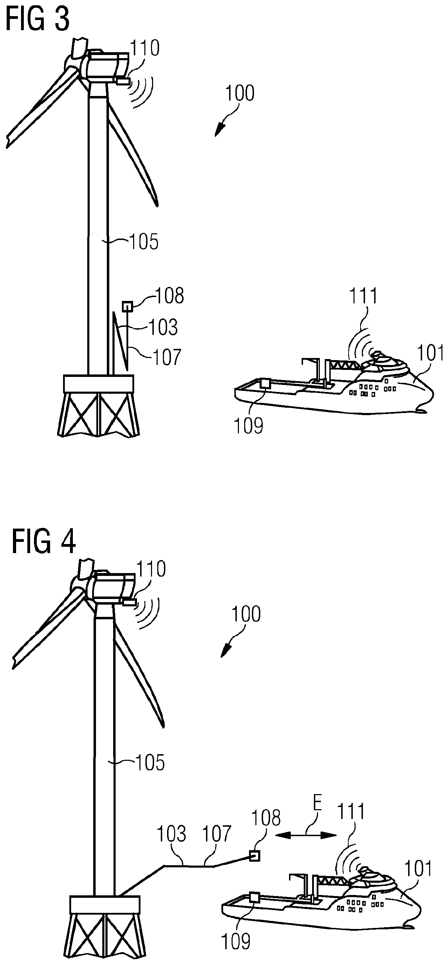

**Figure 3** shows an offshore fueling system 100 according to embodiments of the invention, wherein the feeding line 103 is decoupled in an idle state. As can be observed in Figure 3, the feeding line 103 is held by a holding apparatus 107, which is a foldable crane (arm). When the feeding line 103 is not coupled to the vessel 101, the fueling system 100 may be in an idle state and thus the holding apparatus 107, e.g. the crane arm, may be folded. In this state, the fuel system 100 may however communicate with a vessel 101 via the communication unit 110. For example, the communication unit 110 may detect the vessel 101 to be fueled, in particular by receiving Automatic Identification System data of the vessel 101. The communication unit 110 may further fuel request data from the vessel 101, and may send position data (of the fueling system 100) and instructions for the vessel 101. Such instructions may comprise information for the vessel 101 to bring itself into a position for the fueling operation.

**Figure 4** shows an offshore fueling system 100 according to embodiments of the invention, wherein the feeding line 103 is being coupled to a vessel 101 in an operational state. The coupling of the feeding line 103 to the vessel 101 may be an automatic coupling controlled by the control unit 104 as described in previous embodiments. The coupling may begin by automatically extending the feeding line 103 towards the vessel 101 along an extension direction E. This may be done by means of a propelling unit 201, or by means of a holding apparatus 107 as depicted in Figure 4. In a next step, according to an embodiment of the invention, the coupling unit 108 of the feeding line 103 is coupled to a coupling unit reception 109 of the vessel 101. Upon successful completion of the coupling, the control unit 104 may receive, via the communication unit 110, a signal 111 indicative of completion of the coupling.

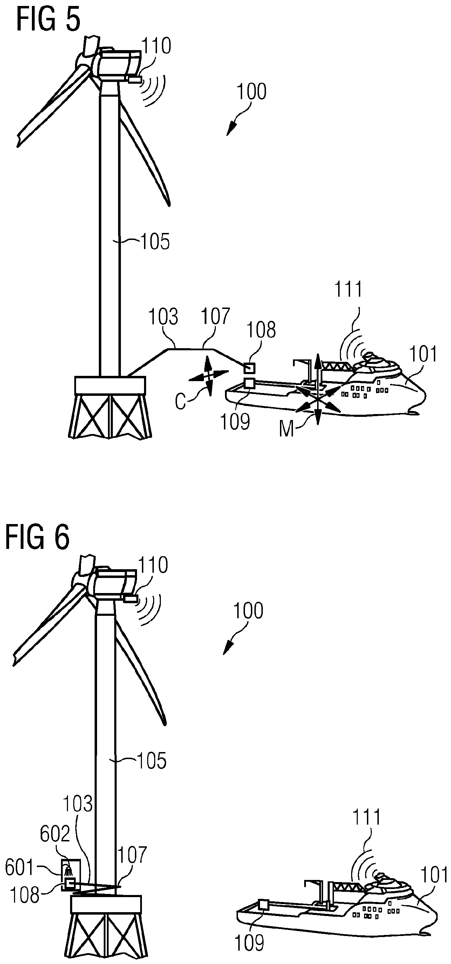

**Figure 5** shows an offshore fueling system 100 according to embodiments of the invention, wherein the feeding line 103 is coupled to a vessel and wherein the movement M of the vessel is compensated by compensation movement C of the feeding line 103 (and of the holding apparatus 107, respectively), as has been described in detail above.

**Figure 6** shows an offshore fueling system 100 according to another embodiment of the invention, wherein the feeding line 103 is decoupled in an idle state and wherein the coupling unit 108 is stored in a storage compartment 601 and may be (optionally) cleaned by means of a cleaning unit 602. For example, the cleaning unit 602 may comprise jets for spraying a cleaning fluid onto and/or into the coupling unit 108 (or for example onto/into a nozzle of the coupling unit). The cleaning unit may further comprise brushes and/or other cleaning means for cleaning (removing remainders of a fuel, of sea water, etc., for example) the coupling unit 108. The storage compartment 601 may be configured for opening and closing automatically and such that the coupling unit 108 may be protected inside the storage compartment 601 from environmental impacts such as sea water, wind, and contamination. This may ensure longevity of the coupling unit 108, low maintenance cost, and a safe and efficient coupling to the coupling unit reception 109 of the vessel 101. In the storage compartment 601, the coupling unit 108 may also be tested for functionality before or after a fueling operation, for example by opening or closing valves or other components.

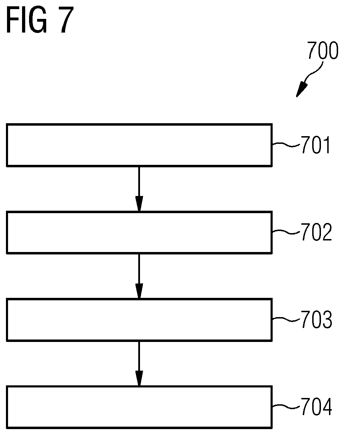

**Figure 7** shows a method 700 for offshore fueling a vessel. The method 700 may comprise the steps of detecting 701 a vessel 101, automatically coupling 702 a feeding line 103 to the vessel 101, fueling 703 the vessel 101, and completing 704 a fueling operation.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

## Claims

1. Offshore fueling system (100) for fueling a vessel (101), the fueling system (101) comprising:
a fuel storage tank (102) installed offshore above a seabed (S),
a feeding line (103) fluidly connected to the fuel storage tank (102) and configured for being coupled to the vessel (101), and
a control unit (104) configured for automatically detecting the vessel (101) to be fueled and configured for automatically coupling the feeding line (103) to the vessel (101) .

2. Offshore fueling system (100) according to the preceding claim,
further comprising an offshore wind turbine (105),
wherein the offshore wind turbine (105) comprises a fuel production unit (106), and
wherein the fuel storage tank (102) and the feeding line (103) are comprised by the offshore wind turbine (105).

3. Offshore fueling system (100) according to claim 2,
wherein the fuel production unit (106) comprises an electrolyzer for electrolyzing water into hydrogen and oxygen, in particular by using electricity generated by the offshore wind turbine (105).

4. Offshore fueling system (100) according to one of the preceding claims,
wherein the feeding line (103) is configured for feeding a fuel to the vessel (101), wherein the fuel is selected from the group consisting of:
ammonia,
hydrogen,
oxygen,
liquefied natural gas,
methanol,
ethanol,
propane,
butane,
gasoline,
intermediate fuel oil,
synthetic fuel,
heavy oil, and
diesel oil, in particular marine diesel oil.

5. Offshore fueling system (100) according to one of the preceding claims, further comprising
a holding apparatus (107) for holding the feeding line (103),
wherein the holding apparatus (107) is retractable and extendable, such that the holding apparatus (107) is retracted in an idle state, in which the feeding line (103) is decoupled from the vessel (101), and such that the holding apparatus (107) is extended in an operational state, in which the feeding line (103) is coupled to the vessel (101), and wherein the holding apparatus (107) is selected from one of the group consisting of:
a cantilever,
a boom,
a crane arm, and
a reel.

6. Offshore fueling system (100) according to one of the preceding claims,
wherein the feeding line comprises a coupling unit (108),
wherein the coupling unit is configured for being coupled to a coupling unit reception (109) of the vessel (101).

7. Offshore fueling system (100) according to one of the preceding claims,
wherein the feeding line (103) is a floating feeding line configured for at least partially floating on a sea surface (A), and
wherein the offshore fueling system (100) further comprises a propelling unit (201), in particular a remotely operated vehicle, controlled by the control unit (104) and configured for propelling the floating feeding line (103) towards the vessel (101).

8. Offshore fueling system (100) according to one of the preceding claims,
further comprising a compensation mechanism configured for stabilizing the holding apparatus (107) in use by compensating for the movement (M) of the vessel.

9. Offshore fueling system (100) according to one of the preceding claims,
further comprising a storage compartment (601) configured for
receiving and storing the coupling unit (108) and further configured for cleaning the coupling unit (108) inside the storage compartment (601) by means of a cleaning unit (602).

10. Offshore fueling system (100) according to one of the preceding claims,
further comprising a communication unit (110) connected to the control unit (104),
wherein the communication unit (110) is configured for processing, receiving and/or sending one of
Automatic Identification System signals,
weather data,
vessel data,
motion of the sea data,
connection completion data,
fueling operation completion data,
digital positioning system data, or
fueling system fluid management data.

11. Method (700) for offshore fueling a vessel (101), the method (700) comprising:
detecting (701), by means of a control unit (104) and a communication unit (110) connected to the control unit (104), the vessel (101) to be fueled,
automatically coupling (702) a feeding line (103) to the vessel (101), wherein the feeding line (103) is fluidly coupled to a fuel storage tank (102),
wherein the fuel storage tank (102) is installed offshore above a seabed (S), and
fueling (703) the vessel (101).

12. Method according to claim 11,
wherein the detecting (701) of the vessel (101) comprises
receiving, via the communication unit (110), Automatic Identification System data of the vessel (101),
wherein the communication unit (110) is coupled to the coupled to the control unit (104),
receiving, via the communication unit (110), fuel request data from the vessel (101), and
sending, via the communication unit (110), position data and instructions for the vessel (101).

13. Method for offshore fueling according to claim 11,
wherein the coupling of the feeding line (103) to the vessel (101) comprises
automatically extending the feeding line (103) towards the vessel (101) by means of a propelling unit (201), in particular a remotely operated vehicle, controlled by the control unit (104) and configured for propelling the floating feeding line (103) towards the vessel (101), or by means of a holding apparatus (107),
coupling a coupling unit (108) of the feeding line (103) to a coupling unit reception (109) of the vessel (101), and
receiving, via the communication unit (110), a signal indicative of completion of the coupling.

14. Method according to claim 11,
wherein fueling the vessel (101) comprises
transferring a fuel from a fuel storage tank (102) of the offshore fueling system via the feeding line (103) to the vessel (101).

15. Method according to claim 11,
wherein the method further comprises
completing (704) the fueling operation,
wherein the completing comprises
receiving, via the communication unit (110), a signal indicative of completion of the fueling of the vessel (101),
decoupling the coupling unit (108) from the coupling unit reception (109),
retracting the feeding line (103) by means of the propelling unit (201), or by means of a holding apparatus (107),
receiving and storing the coupling unit (108) in a storage compartment (601) configured for receiving and storing the coupling unit (108) and further configured for cleaning the coupling unit (108) inside the storage compartment (601) by means of a cleaning unit (602), and
cleaning the coupling unit (108) by means of the cleaning unit (602).
